# EUROPÄISCHE PATENTSCHRIFT

(11) **EP 2 875 886 B1**
(45) Veröffentlichungstag und Bekanntmachung des Hinweises auf die Patenterteilung: **08.07.2020**
(21) Anmeldenummer: 14003896.9
(22) Anmeldetag: 19.11.2014
(51) Int. Cl.: B23B 51/02, E21B 10/44, B29C 45/14, B23P 15/32, B29C 33/42, B29C 33/44, B29L 1/00

(54) **Spiralbohrer und Verfahren zu dessen Herstellung**
Twist drill and method for its production
Foret hélicoïdal et son procédé de fabrication

(30) Priorität: 25.11.2013 IT BZ20130059
(43) Veröffentlichungstag der Anmeldung: 27.05.2015
(73) Patentinhaber: INTERCABLE SRL, 39031 Brunico (BZ) (IT)
(72) Erfinder: Mutschlechner, Klaus, I-39031 Brunico (Bolzano) (IT); Oberparleiter, Konrad, I-39030 Sankt Lorenzen (BZ) (IT)
(74) Vertreter: Oberosler, Ludwig

(56) Entgegenhaltungen:
- DE-A1- 3 614 010
- US-A- 3 372 763
- US-A- 3 960 223
- US-A1- 2007 256 860
- BAUGH J A ET AL: "FLEXIBLE AUGER", IBM TECHNICAL DISCLOSURE BULLETIN, INTERNATIONAL BUSINESS MACHINES CORP. (THORNWOOD), US, Bd. 19, Nr. 10, März 1977 (1977-03), Seite 3665, XP001173675, ISSN: 0018-8689

## Beschreibung

Die Erfindung bezieht sich auf einen Spiralbohrer gemäß dem Oberbegriff des Anspruchs 1 und auf Verfahren zur Herstellung eines solchen Spiralbohrers.

Ein Spiralbohrer ist in der US 137,744 beschrieben. Dieser Spiralbohrer besteht aus einer Mehrzahl von Wendelelementen deren Enden, mittels entsprechender Abstufungen, verbunden sind um eine durchgehende Wendel auszubilden. Die Wendelelemente weisen eine durchgehende axiale, im Querschnitt polygonale, Bohrung auf in welche ein Schaft einsetzbar ist welcher einen, zur Bohrung komplementären, Querschnitt hat. Auf diese Weise können Spiralbohrer angeboten werden welche durch Entnehmen oder Einsetzen einzelner Wendelelemente unterschiedliche Längen aufweisen.

Aus dem IT-Patentansuchen Nr.: BZ2013A000010 ist ein Spiralbohrer für Eis oder Schnee bekannt welcher aus einem innerem Schaft mit polygonalem Querschnitt besteht, welcher an der Spitze Schneiden und am hinteren Ende einen Spannteil aufweist um in ein Spannfutter eingesetzt werden zu können. Auf den besagten Schaft können ein oder mehrere Wendelelemente aufgesteckt werden.

Die Möglichkeit des Zusammensetzens mehrerer Wendelelemente auf einem gemeinsamen Schaft ist sehr wichtig weil dadurch die Möglichkeit geboten wird die einzelnen Wendelelemente aus einem anderen Werkstoff als jenem des Schaftes herzustellen.

Aus der DE 36 14 010 A1 ist ein Gesteinsbohrer, bestehend aus einem metallischen Schaft mit einem vorwiegend metallischen Bohrerkopf und einer mit dem Bohrerkopf und dem Schaft mitbewegter Kunststoffwendel, bekannt. Der besagte Schaft kann einen polygonalen Querschnitt aufweisen und ist mit Ausnehmungen versehen um ein axiales Verschieben der angegossenen Wendel zu vermeiden. Die Wendel endet im Bereich hinter dem Bohrkopf und hat, in Bezug auf diesen, einen kleineren Durchmesser. Der Bohrkopf kann mit Hartmetall oder Keramikplättchen versehen sein. Dadurch dass der Schaft mit dem Bohrkopf einstückig ist, ist die Herstellung aufwändig. Der hintere Teil des Bohrkopfes und der entsprechende vordere Endbereich der Wendel sind nicht miteinander verbunden, das gegenseitige Verdrehen und axiale Verschieben wird ausschließlich durch den polygonalen Querschnitt des Schaftes, bzw. durch die Ausnehmungen am Schaft, verhindert.

Aus der US 3,960,223 A ist ein Gesteinsbohrer nach dem Oberbegriff des Anspruchs 1 bekannt welcher aus einem inneren, metallischen Bohrerschaft besteht welcher vorne mit einem Zentriervorsprung endet. Ein metallischer, ringförmiger Bohrkopfkörper ist auf einen, hinter dem Zentriervorsprung vorgesehenen, pyramidenstumpfförmigen Teil des Bohrerschaftes aufgesetzt. Hinter dem pyramidenstumfförmigen Teil verläuft der Bohrerschaft vierkantig und ist mit einem Wendelkörper aus Kunststoff, mit axial verlaufendem Vierkantdurchbruch, versehen von welchem eine Wendel absteht. Dieser Bohrerschaft mit einstückig angeformtem Zentriervorsprung und pyramidenförmigem Teil für den Bohrkörper ist wegen der unterschiedlichen Querschnitte aufwändig in der Herstellung. Die Schneidplaketten sind am Zentriervorsprung und am metallischen Bohrkörper eingesetzt und verlötet. Die Wendel aus Kunststoff schließt kopfseitig an einem der beiden wendelförmigen Flügel des Bohrkörpers an. Eine Befestigung oder Verankerung der Schneidplaketten am Wendelkörper oder an der Wendel ist nicht vorgesehen.

Die Aufgabe der vorliegenden Erfindung besteht darin, dass nicht eine Wendel genutzt wird welche durch axiales Aufstecken mehrerer Wendelelemente auf einen Schaft oder durch Angießen am Schaft geschaffen wird, sondern dass ein dreh-resistentes Element genutzt wird welches mit dem besagten Schaft verbunden ist und zusätzlich vorne auch an der, mit Schneiden versehenen, Plakette der Bohrerspitze befestigt ist.

Diese Aufgabe wird durch einen Spiralbohrer mit den Merkmalen des Anspruchs 1 und durch die, in den Ansprüchen 8 und 9, angeführten Merkmale der Herstellungsphasen, gelöst.

Weitere Merkmale und Details ergeben sich aus den Ansprüchen und aus der folgenden Beschreibung einer, in den beigelegten Zeichnungen schematisch, als nicht begrenzendes Beispiel dargestellten, vorzuziehenden Ausführungsform.

In den Zeichnungen zeigen:

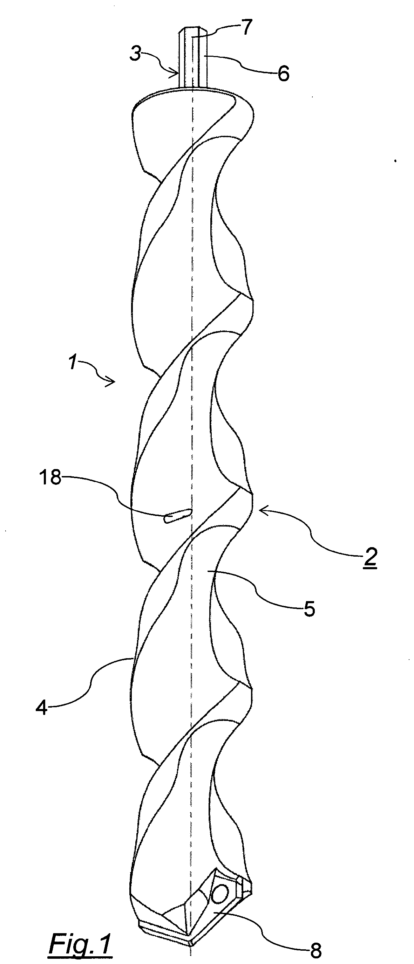

- die Fig. 1 eine Seitenansicht eines erfindungsgemäßen Spiralbohrers,

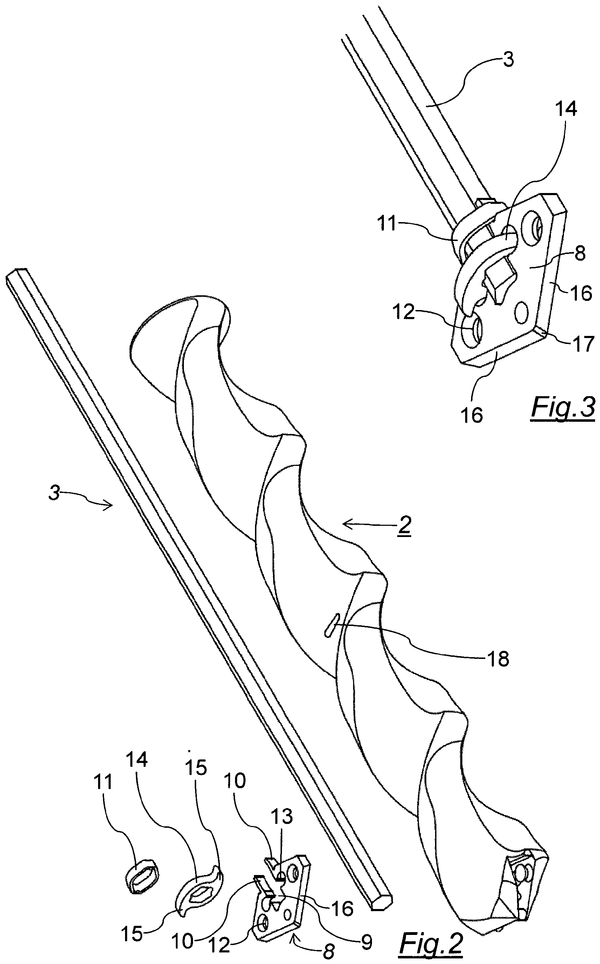

- die Fig. 2 eine perspektivische auseinandergezogene Darstellung des in Fig. 1 dargestellten Spiralbohrers,
- die Fig. 3 eine perspektivische Darstellung einer, an einem nur teilweise dargestellten Schaft befestigten, Plakette,

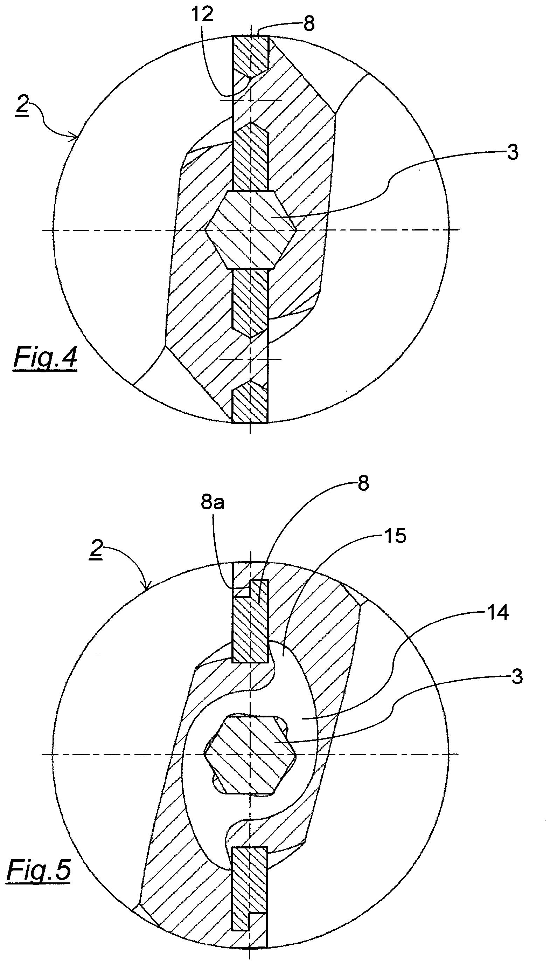

- die Fig. 4 einen Querschnitt durch eine Plakette mit dem, an den Durchbrüchen der Plakette verankerten, Wendelelement,
- die Fig. 5 einen Querschnitt durch eine Plakette im Bereich der Mitnehmerscheibe und mit dem, an den seitlich an der Plakette vorgesehenen Hinterschneidungen verankerten, Wendelelement,
- die Fig. 6 eine perspektivische Darstellung einer Plakette mit polygonalem Sitz welcher am vorderen Ende des Schaftes aufgesteckt ist und samt zwei, mittels Schrauben befestigten, austauschbaren Klingen,
- die Fig. 7 einen Querschnitt durch eine Plakette der in Fig. 6 dargestellten Art und durch die Befestigungsschrauben der austauschbaren Klingen samt dem, an den rohrförmigen Ansätzen der Plakette verankerten, Wendelelement,
- die Fig. 8 einen Querschnitt durch eine Plakette im Bereich der Befestigungsschrauben für die vorderen Enden der beiden Hälften welche die Wendel des Spiralbohrers bilden.

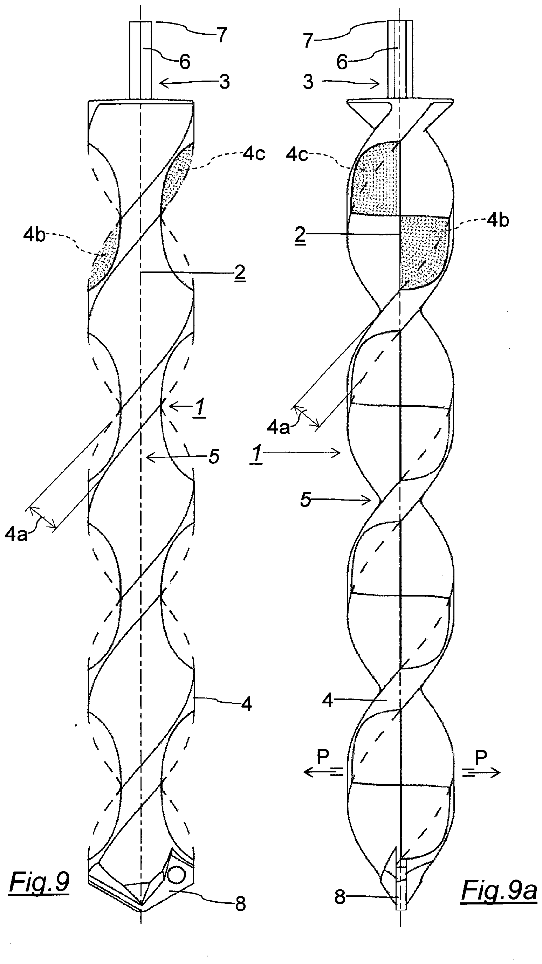

- die Fig. 9 eine Seitenansicht des in Fig. 1 dargestellten Spiralbohrers mit der Ebene, in welcher die, die Bohrerspitze bildende, Plakette liegt, in einem Winkel von 90° zur Beobachtungsrichtung,
- die Fig. 9a eine Seitenansicht des in Fig. 9 dargestellten Spiralbohrers mit der Ebene in welcher die, die Bohrerspitze bildende, Plakette liegt, ausgerichtet nach der Beobachtungsrichtung.

Der erfindungsgemäße Spiralbohrer wird insgesamt mit der Bezugsnummer 1 gekennzeichnet.

Der Spiralbohrer 1 besteht aus einem Wendelelement 2 und einem inneren, koaxial zur besagten Wendel angeordneten, Schaft 3.

Das Wendelelement 2 weist in bekannter Weise Wendeln 4 und Rillen 5 auf.

Das Wendelelement 2 ist mit dem Schaft 3 formschlüssig verbunden. Der Schaft 3 weist einen polygonalen Querschnitt 6 auf, welchem die nicht dargestellte, durchgehende Bohrung des Wendelelements komplementär entspricht. Das hintere Ende 7 des Schaftes 3 ist geeignet um in ein nicht dargestelltes Spannfutter eingesetzt zu werden.

Am vorderen, dem Ende 7 entgegengesetzten, Ende ist der Schaft mit einer Plakette verbunden. Diese weist rückseitig eine Ausnehmung 9 auf welche sich zwischen zwei, sich parallel zur Achse des Schaftes ersteckenden, Ansätzen 10 fortsetzt. In die Ausnehmung 9, zwischen den Ansätzen 10, ist das vordere Ende des Schaftes 3 einsetzbar. Nach Einsetzen des entsprechenden Endes des Schaftes 3 ist an den Ansätzen 10 ein Ring 11 anbringbar.

Die Plakette 8 weist Durchbrüche 12 auf welche zur Achse des Schaftes symmetrisch angeordnet sind.

Im mittleren Bereich erstreckt sich die Ausnehmung 9 seitlich in zwei Erweiterungen 13 welche ebenfalls zur Achse des Schaftes symmetrisch angeordnet sind. In diese Erweiterungen 13 sind die Klinken 15 welche von einer, auf das Profil des Schaftes 3 aufgesetzten, Mitnehmerscheibe 15 abstehen, eingesetzt.

Die Plakette 8 weist weiters zwei Schneiden 16 auf welche zu einer zentralen, quer zur Achse des Schaftes verlaufende, Kante 17 ausgerichtet sind.

Das Wendelelement 2 weist im mittleren Bereich eine quer verlaufende, durchgehende Bohrung 18 für einen Kern oder ein Positionierung- oder Auflageteil für den Schaft 3 innerhalb der Form, auf.

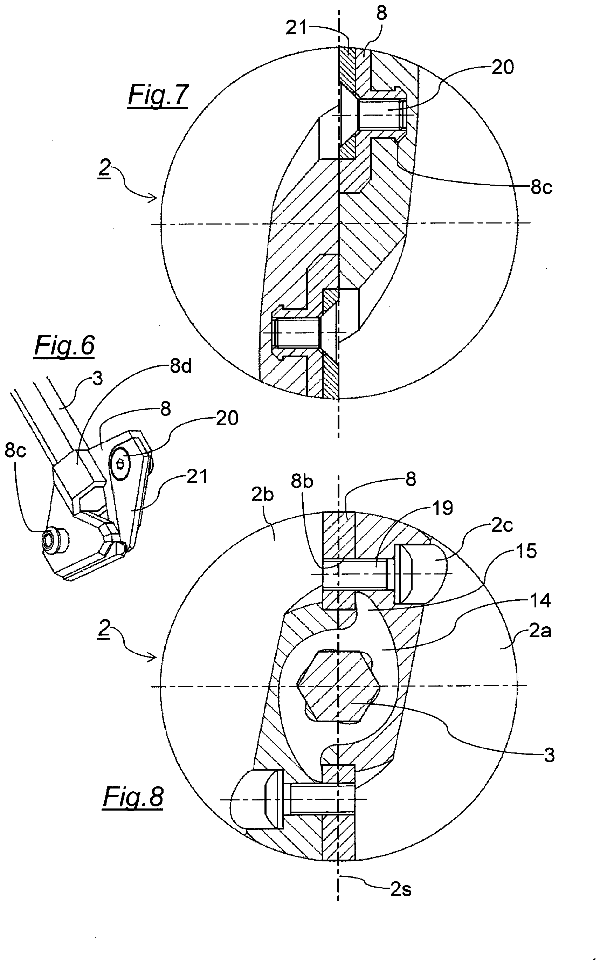

Auch wenn eine vorzuziehende Ausführungsform eines erfindungsgemäßen Spiralbohrers beschrieben worden ist, bestehen viele Änderungsmöglichkeiten und Varianten welche sich innerhalb des Schutzumfanges der Erfindung befinden. Diese betreffen z.B. auch, dass die Schneiden 16 direkt am Schaft 3 vorgesehen sind, bzw. die Verwendung von Plaketten 8 ohne Schneiden welche mit Sitzen für die Anbringung und die Befestigung austauschbarer Klingen 21 mittels Schrauben 20 versehen sind (Fig. 6, 7). Das Formen des Wendelelementes 2 kann als ein einziges Stück oder als mehrere Teile 2a, 2b welche seitlich am Schaft anbringbar sind (Fig. 8), unabhängig vom Schaft 3, erfolgen, in diesem Fall sind die Teile unter sich und am Schaft befestigt und mit dem vorderen Teil an der Plakette 8 verankert; alternativ kann das Formen durch Einsetzen des Schaftes 3, zusammen mit dem Positionierungs- und Auflagekern im Mittelbereich des Schaftes, in die Zweifachform zwecks Spritzgussformung erfolgen, wobei der Spiralbohrer durch Umspritzen mit thermoplastischem Werkstoff hergestellt wird.

Im Fall der Herstellung des Wendelelements 2 als separates Werkstück und auch im Fall der Herstellung durch Umspritzen des axialen metallischen Schaftes 3, haben die Wendeln 4 des erfindungsgemäßen Wendelelementes 2 nicht eine regelmäßige Wandstärke und bekannten regelmäßigen Verlauf, sondern weisen, im Bereich der die Plakette beinhaltenden Ebene und der dazu im Winkel von 90° angeordneten Ebene, Abschnitte mit regulärer, gleichbleibender Wandstärke 4a auf während angrenzend an diese besagten Abschnitte an der vorderen und an der hinteren Fläche der Wendeln 4, zueinander versetzt, Bereiche mit verminderter Wandstärke vorgesehen sind welche durch Werkstoffverminderungen 4b, 4c entstehen um Hinterschneidungen zu eliminieren welche das störungsfreie Öffnen P der Form, senkrecht zur Ebene welche die Plakette beinhaltet, verhindern würden. Die Praxis hat gezeigt dass die besagten Bereiche mit den Verminderungen 4b, 4c sich nicht negativ auf die Beförderung des, von der Bohrerspitze abgehobenen, Materials auswirken.

Es ist klar, dass in diesem letzten Fall der Positionierungs- und Auflagekern für den Schaft 3 welcher ein Durchbiegen dieses verhindert, gemäß der Öffnungsrichtung der Zweifachform ausgerichtet sein muss. Auch die Plakette 8 selbst muss sich in einer, zur Öffnungsrichtung der Zweifachform, senkrechten Position befinden um zu verhindern, dass die Plakette selbst eine Hinterschneidung bildet. Die Erfindung schließt nicht aus, dass an Stelle des Positionierungs- und Auflagekerns am Schaft, quer zu diesem, eine oder mehrere Klingen befestigt werden, wobei im entsprechenden Bereich eine Vergrößerung des Durchmessers des Wendelelements erfolgen kann.

Im Fall von an der Plakette 8 mittels Schrauben 20 befestigten Klingen 21, sind die Schrauben vorteilhafterweise in durchgehende Gewindebohrungen eingeschraubt welche an der Rückseite der Plakette 8, innerhalb rohrförmiger Ansätze 8c (Fig. 6, 7) sich fortsetzen , welche eine ringförmige äußere Wulst aufweisen so dass diese für die Verankerung des vorderen Teiles des durch Umspritzen angebrachten Wendelelementes 2 dienen, bzw. um als vorspringender Knopf für die Anbringung durch Aufklipsen des vorderen Teiles der, das Wendelelement 2 bildenden, Teile 2a, 2b zu dienen.

Die Plakette 8 kann an der Rückseite, an Stelle der Ansätze 10 und der Ausnehmung 9, einen polygonalen Sitz 8d (Fig. 6) aufweisen welcher geeignet ist um am vorderen Ende des Schaftes 3, welcher einen entsprechenden Querschnitt aufweist, aufgesteckt zu werden.

### Auflistung der Bezugszahlen

- 1: Spiralbohrer
- 2: Wendelelement
- 2a: Teil des Wendelelementes
- 2b: Teil des Wendelelementes
- 2c: durchgehende Gewindebohrung für Befestigungsschrauben 19
- 2s: Verbindungsebene zwischen 2a und 2b
- 3: Schaft
- 4: Wendel
- 4a: Wandstärke des geradlinigen Abschnittes der Wendel 4
- 4b: Werkstoffverminderung an der vorderen Fläche der Wendel
- 4c: Werkstoffverminderung an der hinteren Fläche der Wendel
- 5: Rille der Wendel
- 6: Polygonaler Spannteil
- 7: Ende
- 8: Plakette
- 8a: Hinterschneidung
- 8b: Gewindebohrung
- 8c: rohrförmiger Ansatz mit ringförmiger Wulst
- 8d: polygonaler Sitz
- 9: Ausnehmung
- 10: Ansätze
- 11: Ring
- 12: Durchbrüche
- 13: Erweiterungen
- 14: Mitnehmerscheibe
- 15: Klinken
- 16: Schneide
- 17: Zentrale Kante
- 18: Bohrung
- 19: Befestigungsschrauben für das Wendelelement
- 20: Befestigungsschrauben für die Klingen 21
- 21: Austauschbare Klinge
- P: Öffnungsrichtung der Form

## Patentansprüche

1. Spiralbohrer bestehend aus einem inneren metallischen Schaft (3) mit polygonalem Querschnitt welcher vorne mit einer Plakette (8) mit mindestens einer Schneide (16) und hinten mit einem Spannzapfen versehen ist, wobei koaxial am besagten Schaft (3) ein Wendelelement (2) mit spiralförmigen Rillen (5) angebracht ist, wobei das Wendelelement (2) mit spiralförmigen Rillen (5) und Wendeln (4) einstückig oder aus mindestens zwei Teilen (2a, 2b) die gemäß einer, die Achse des Schaftes (3) beinhaltende, Ebene (2s) durch Anklipsen mittels Befestigungsorgane oder durch Kleben zusammengesetzt sind, aus Kunststoff oder Leichtmetalllegierung hergestellt ist, wobei die Plakette (8) am Ende des Schaftes (3) formschlüssig und verdrehsicher angebracht ist und **dadurch gekennzeichnet, dass** die besagten, das Wendelelement (2) bildenden, Teile (2a, 2b), bzw. das einstückige Wendelelement, mit dem vorderen Ende, an der Plakette (8) befestigt oder verankert ist, bzw. sind.

2. Spiralbohrer gemäß Anspruch 1, **dadurch gekennzeichnet, dass** das Wendelelement (2) mit spiralförmigen Rillen (5) aus einem einzigen Stück besteht welches koaxial am Schaft (3) und teilweise an der Plakette (8) durch Umspritzen hergestellt ist, wobei die formschlüssige Verbindung mit dem besagten Schaft (3) und die Verankerung des vorderen Teiles an der, mit geeigneten Durchbrüchen (12), Hinterschneidungen (8a) und/oder Ansätze (8c) versehenen, Plakette (8) erreicht wird und dass die Wendeln (4) des Wendelelements (2) geradlinige Abschnitte mit regulärer Wandstärke (4a) aufweisen welche in der selben, die Plakette (8) der Bohrerspitze beinhaltenden, Ebene und in einer dazu im rechten Winkel angeordneten Ebene liegen, wobei an den Endbereichen diese Abschnitte Verminderungen der Wandstärke der Wendeln (4) anschließen welche, zueinander versetzt angeordnet, an der vorderen und an der hinteren Fläche der Wendeln (4) angeordnet sind.

3. Spiralbohrer gemäß der Ansprüche 1 und 2, **dadurch gekennzeichnet, dass** an der Plakette (8) zwei Schneiden (16) vorgesehen sind welche zu einer zentralen Kante (17) ausgerichtet sind, dass die Plakette (8) zum Schaft (3) hin eine axiale Ausnehmung (9) aufweist welche zur zentralen Kante (17) hin gerichtet ist, dass zwei zueinander parallele Ansätze (10) rückseitig die besagte Ausnehmung (9) verlängern und dass an der Plakette (8) Durchbrüche (12) vorgesehen sind in welchen sich das vordere Ende des Wendelelementes (2) mit spiralförmigen Rillen (5) verankert.

4. Spiralbohrer gemäß Anspruch 3, **dadurch gekennzeichnet, dass** die Ausnehmung (9) zwei Erweiterungen (13) aufweist welche zur Achse des Schaftes (3) symmetrisch angeordnet sind, in welche eine Mitnehmerscheibe (14) einsetzbar ist welche formschlüssig mir dem Schaft (3) verbunden ist und mit zwei Klinken (15) seitlich auf die Plakette (8) wirkt.

5. Spiralbohrer gemäß Anspruch 4, **dadurch gekennzeichnet, dass** an den beiden nach hinten abragenden Ansätzen (10) der Plakette (8) ein Ring (11) aufsetzbar ist.

6. Spiralbohrer gemäß der Ansprüche 1 und 2, **dadurch gekennzeichnet, dass** die Plakette (8) die Form eines Trägerelements hat und vorne mindestens einen Sitz für die Befestigung einer austauschbaren Klinge (21) mittels Schraube (20) aufweist.

7. Spiralbohrer gemäß der Ansprüche 1 und 2, **dadurch gekennzeichnet, dass** die Plakette (8) welche die Form eines Trägerelements hat, rückseitig in Richtung zum vorderen Ende des Schaftes (3), einen polygonalen Sitz (8d) für die formschlüssige Verbindung mit diesem aufweist.

8. Verfahren zur Herstellung eines erfindungsgemäßen Spiralbohrers gemäß Anspruch 5 oder 7, **dadurch gekennzeichnet, dass** es folgende Arbeitsphasen umfasst:
- Montage der Plakette (8) zusammen mit der Mitnehmerscheibe (14) und dem Ring (11), bzw. der Plakette mit polygonalem Sitz, am vorderen Ende des Schaftes (3),
- Einsetzen des Schaftes (3) zusammen mit der Plakette (8), samt Mitnehmerscheibe (14)und Ring (11), bzw. zusammen mit der Plakette mit polygonalem Sitz, in eine Zweifachform,
- Positionieren des Schaftes (3) um ein Durchbiegen in einer, die Achse des Schaftes beinhaltenden, Ebene auszuschließen,
- Positionieren des Schaftes (3) zusammen mit der Plakette (8) in einer Ebene welche zur Öffnungsrichtung der Zweifachform senkrecht verläuft,
- Schließen der Form und Einspritzen des Kunststoffes in beide Formhohlräume,
- Öffnen der Form,
- Entnahme oder Auswurf des geformten Spiralbohrers.

9. Verfahren zur Herstellung eines Spiralbohrers gemäß Anspruch 1, **dadurch gekennzeichnet, dass** es folgende Arbeitsphasen umfasst:
- Montage eines radialen Kerns zwecks Schaffung einer Bohrung (18) im zu formenden Werkstück, als Alternative Montage einer zweiten, am Schaft (3) formschlüssig angebrachten, Klinge in der entsprechenden Position der Bohrung (18),
- Einsetzen eines polygonalen axialen Kerns,
- Positionieren des radialen Kerns, bzw. der Klinge, so dass ein Durchbiegen des polygonalen axialen Kerns in einer, die Achse des radialen Kerns, bzw. der Klinge, beinhaltenden Ebene verhindert wird,
- Einspritzen des Kunststoffes in die Form,
- Herausziehen des Einsatzes,
- Öffnen der Form,
- Entnahme des axialen polygonalen Kerns,
- Entnahme des radialen Kerns
- Entnahme oder Auswurf des geformten Wendelelements (2) aus der Form,
- Zusammenbau des derart hergestellten Wendelelements mit einem Schaft (3) welcher mit einer Plakette (8) versehen ist welche mindestens eine Schneide (16) aufweist und Befestigung des vorderen Endes des Wendelelements (2) an der Plakette (8).

## Claims

1. A twist drill bit consisting of an inner metal shaft (3) having a polygonal cross-section, which is provided at the front with a plate (8) having at least one cutting edge (16) and at the rear with a chucking pin, wherein a turning element (2) having helical flutes (5) is mounted coaxially on said shaft (3), wherein the turning element (2) having helical flutes (5) and spirals (4) is made of plastic or light metal alloy as a single piece or from at least two parts (2a, 2b) which are assembled along a plane (2s) that contains the axis of the shaft (3) by clipping using fastening elements or by adhesive bonding, wherein the plate (8) is mounted on the end of the shaft (3) in a form-fitting and non-rotatable manner, **characterized in that** said parts (2a, 2b) forming the turning element (2), or the one-piece turning element, are or is fastened or anchored to the plate (8) by the front end.

2. The twist drill bit according to claim 1, **characterized in that** the turning element (2) having helical flutes (5) consists of a single piece which is produced coaxially on the shaft (3) and partially on the plate (8) by overmoulding, wherein the form-fitting connection to said shaft (3) and the anchoring of the front part to the plate (8), which is provided with suitable apertures (12), undercuts (8a) and/or projections (8c), is achieved, and **in that** the spirals (4) of the turning element (2) have rectilinear portions with a regular wall thickness (4a) which lie in the same plane that contains the plate (8) of the drill bit tip and in a plane arranged at right angles thereto, wherein, at the end regions, said portions adjoin reductions in the wall thickness of the spirals (4) which are arranged offset from one another on the front and on the rear surface of the spirals (4).

3. The twist drill bit according to claims 1 and 2, **characterized in that** two cutting edges (16) are provided on the plate (8), said cutting edges being oriented relative to a central edge (17), **in that** the plate (8) has, towards the shaft (3), an axial recess (9) which is directed towards the central edge (17), **in that** two mutually parallel projections (10) extend said recess (9) at the rear, and **in that** apertures (12) are provided on the plate (8), in which the front end of the turning element (2) having helical flutes (5) is anchored.

4. The twist drill bit according to claim 3, **characterized in that** the recess (9) has two widened areas (13) which are arranged symmetrically in relation to the axis of the shaft (3) and into which a drive disc (14) can be inserted, which drive disc is connected to the shaft (3) in a form-fitting manner and acts with two pawls (15) laterally on the plate (8) .

5. The twist drill bit according to claim 4, **characterized in that** a ring (11) can be placed onto the two rearwardly protruding projections (10) of the plate (8).

6. The twist drill bit according to claims 1 and 2, **characterized in that** the plate (8) is in the form of a carrier element and has at the front at least one seat for fastening a replaceable blade (21) by means of a screw (20).

7. The twist drill bit according to claims 1 and 2, **characterized in that** the plate (8), which is in the form of a carrier element, has at the rear, directed towards the front end of the shaft (3), a polygonal seat (8d) for form-fitting connection thereto.

8. A method for producing an inventive twist drill bit according to claim 5 or 7, **characterized in that** it comprises the following working phases:
- installing the plate (8) together with the drive disc (14) and the ring (11), or the plate having a polygonal seat, on the front end of the shaft (3),
- inserting the shaft (3) together with the plate (8), along with the drive disc (14) and the ring (11), or together with the plate having a polygonal seat, into a two-compartment mould,
- positioning the shaft (3) so as to prevent bending in a plane that contains the axis of the shaft,
- positioning the shaft (3) together with the plate (8) in a plane that extends perpendicular to the direction of opening of the two-compartment mould,
- closing the mould and injecting the plastic into both mould cavities,
- opening the mould,
- removing or ejecting the moulded twist drill bit.

9. The method for producing a twist drill bit according to claim 1, **characterized in that** it comprises the following working phases:
- installing a radial core for the purpose of creating a bore (18) in the workpiece to be formed, or alternatively installing a second blade in the corresponding position of the bore (18), said second blade being mounted on the shaft (3) in a form-fitting manner,
- inserting a polygonal axial core,
- positioning the radial core, or the blade, such that the polygonal axial core is prevented from bending in a plane that contains the axis of the radial core, or of the blade,
- injecting the plastic into the mould,
- extracting the insert,
- opening the mould,
- removing the axial polygonal core,
- removing the radial core,
- removing or ejecting the moulded turning element (2) from the mould,
- assembling the resulting turning element with a shaft (3) which is provided with a plate (8) that has at least one cutting edge (16), and fastening the front end of the turning element (2) to the plate (8).

## Revendications

1. Foret hélicoïdal constitué d'une tige métallique intérieure (3) de section polygonale, muni à l'avant d'une plaque (8) ayant moins une arête de coupe (16) et à l'arrière d'un ergot de serrage, un élément hélicoïdal (2) avec des rainures hélicoïdales (5) étant monté coaxialement sur ladite tige (3),
dans lequel l'élément hélicoïdal (2) ayant les rainures hélicoïdales (5) et des hélices (4) est réalisé d'une seule pièce ou en au moins deux parties (2a, 2b), qui sont assemblées selon un plan (2s) contenant l'axe de la tige (3) par clipsage au moyen d'éléments de fixation ou par collage, en matière plastique ou en alliage de métaux légers, dans lequel la plaque (8) est fixée à l'extrémité de la tige (3) par engagement positif et de manière à résister à la torsion et
**caractérisé en ce que**
lesdites parties (2a, 2b) formant l'élément hélicoïdal (2) ou l'élément hélicoïdal d'une seule pièce (2) sont/est fixée(s) ou ancrée(s) par l'extrémité avant sur la plaque (8).

2. Foret hélicoïdal selon la revendication 1, **caractérisé en ce que** l'élément hélicoïdal (2) aux rainures hélicoïdales (5) est constitué d'une seule pièce qui est produite coaxialement sur la tige (3) et partiellement sur la plaque (8) par surmoulage, la connexion positive avec ladite tige (3) et l'ancrage de la partie avant à la plaque (8) pourvue d'ouvertures (12), de contre-dépouilles (8a) et/ou de saillies (8c) appropriées étant réalisés, et que les hélices (4) de l'élément hélicoïdal (2) présentent des sections rectilignes d'épaisseur de paroi régulière (4a) qui se trouvent dans le même plan contenant la plaque de pointe du foret (8) et dans un plan perpendiculaire à celui-ci, ces sections étant suivies, dans les zones d'extrémité, par des réductions de l'épaisseur de paroi des hélices (4) qui, décalées les unes par rapport aux autres, sont disposées sur les surfaces avant et arrière des hélices (4).

3. Foret hélicoïdal selon les revendications 1 et 2, **caractérisé en ce que** deux arêtes de coupe (16) sont prévues sur la plaque (8), qui sont orientées vers un bord central (17), **en ce que** la plaque (8) présente un évidement axial (9) face à la tige (3), lequel évidement (9) est orienté vers le bord central (17), **en ce que** deux saillies parallèles (10) prolongent ledit évidement (9) à l'arrière et **en ce que** des ouvertures (12) sont prévues sur la plaque (8), dans lesquelles est ancrée l'extrémité avant de l'élément hélicoïdal (2) aux rainures hélicoïdales (5).

4. Foret hélicoïdal selon la revendication 3, **caractérisé en ce que** l'évidement (9) présente deux élargissements (13) qui sont disposés symétriquement par rapport à l'axe de la tige (3), dans lesquels peut être insérée une plaque d'entraînement (14) qui est reliée à la tige (3) par complémentarité de forme et qui agit latéralement sur la plaque (8) par deux cliquets (15).

5. Foret hélicoïdal selon la revendication 4, **caractérisé en ce qu'**une bague (11) peut être monté sur les deux saillies (10) de la plaque (8) faisant saillie vers l'arrière.

6. Foret hélicoïdal selon les revendications 1 et 2, **caractérisé en ce que** la plaque (8) a la forme d'un élément de support et présente au moins un siège à l'avant pour la fixation d'une lame échangeable (21) au moyen d'une vis (20).

7. Foret hélicoïdal selon les revendications 1 et 2, **caractérisé en ce que** la plaque (8) ayant la forme d'un élément de support présente, à l'arrière, face à l'extrémité avant de la tige (3), un siège polygonal (8d) pour la liaison positive avec celle-ci.

8. Procédé de fabrication d'un foret hélicoïdal selon la revendication 2-5 ou 7, **caractérisé en ce qu'**il comprend les phases de travail suivantes
- montage de la plaque (8) avec la plaque d'entraînement (14) et la bague (11), ou de la plaque à siège polygonal, à l'extrémité avant de la tige (3),
- Insertion de l'arbre (3) avec la plaque (8), de la plaque d'entraînement (14) et de la bague (11), ou de la plaque à siège polygonal, dans un double moule,
- Positionnement de la tige (3) de façon à éviter la flexion dans un plan contenant l'axe de la tige,
- Positionnement de la tige (3) avec la plaque (8) dans un plan perpendiculaire à la direction d'ouverture du double moule,
- Fermeture du moule et injection du plastique dans les deux cavités du moule,
- Ouverture du moule,
- Retrait ou éjection du foret hélicoïdal formé.

9. Procédé de fabrication d'un foret hélicoïdal selon la revendication 1, **caractérisé en ce qu'**il comprend les phases de travail suivantes :
- assemblage d'un noyau radial afin de créer un alésage (18) dans la pièce à former, ou bien assemblage d'une deuxième lame, fixée positivement à la tige (3), dans la position correspondante de l'alésage (18),
- Insertion d'un noyau axial polygonal,
- Positionnement du noyau radial, ou de la lame, de manière à empêcher la flexion du noyau axial polygonal dans un plan contenant l'axe du noyau radial ou de la lame,
- Injection du plastique dans le moule,
- Retrait de l'insert,
- Ouverture du moule,
- Enlèvement du noyau polygonal axial,
- Enlèvement du noyau radial,
- Enlèvement ou éjection de l'élément hélicoïdal moulé (2) du moule,
- Assemblage de l'élément hélicoïdal ainsi produit avec une tige (3) munie d'une plaque (8) ayant au moins une arête de coupe (16) et fixation de l'extrémité avant de l'élément hélicoïdal (2) à la plaque (8).
